# EUROPEAN PATENT APPLICATION

(11) **EP 2 988 451 A1**
(43) Date of publication of application: **24.02.2016**
(21) Application number: 14382325.0
(22) Date of filing: 22.08.2014
(51) Int. Cl.: H04L 12/24, H04L 12/751, H04L 12/715, H04L 12/721

(54) **Method and system for mapping different layouts**

(71) Applicant: Vodafone IP Licensing Limited, The Connection Newbury Berkshire RG14 2FN (GB)
(72) Inventor: López Morillo, Manuel Julián, E-28042 Madrid (ES); Muñoz Marin, Luis Ángel, E-28042 Madrid (ES); Gómez Atrio, José Antonio, E-28042 Madrid (ES)
(74) Representative: Boult Wade Tennant

(57) **Abstract**

There is described a method for automatically mapping network configurations to enable at least two elements belonging to a first layer network to communicate with each other over a second layer network,
comprising:
a) determining, by a second layer element a change in the first network,
b) propagating through one or more third interfaces towards the rest of second layer elements over the second layer network:
- routing information associated with the first configuration; and
- a loopback address information identifying said second layer element,

c) adapting the second configuration by managing connections between said second layer element and one or more of the remaining second layer elements based on the propagated information.

There is also described a system adapted to implement the steps of a method according to the invention.

## Description

### TECHNICAL FIELD OF THE INVENTION

The present invention relates to the field of mapping on telecommunication networks. Particularly, there is described a solution for mapping different layers of different telecommunication network.

### BACKGROUND OF THE INVENTION

Network quality is one of the main features for growth potential in telecommunication networks, for example in mobile data. In a context of all IP readiness of the transport network in telecommunications operators, the current situation is characterized in that there is an increasing tendency in transportation of data to all IP, which leads to a two layer model: IP layer over optical layer. The interaction between those two layers is minimal, so some developments improving inter-layer communication - relationship have raised but a manual provisioning for interconnectivity is still required.

An example of network integration is an IP network into a single IP/MPLS (Multiprotocol Label Switching) network over a high capacity optical network, with capability to deliver high speed and quality connectivity to the clients. Therefore, the network structure is divided into two hierarchical layers, in which co-located network elements work in server/client architecture:
- The lower layer comprises optical network architecture and provides with high speed and long distance between remote sites. In this optical architecture network, the Optical Transmission Network (OTN) comprises mechanisms to create and optimise paths between optical nodes. The OTN configuration may be complex but the paths built are delivered as single point to point connections to the upper layer.
- The upper layer manages the IP services and constitutes its own logical paths between IP network elements (routers). These routers are aware of each other and constitute a network and sub-networks that calculate and protect their own paths between elements. These path calculations are performed via protocols based on label correspondences to specific routing elements and sites (Multilayer Protocol Label Switching, MPLS). The protocol includes a way for each node to adhere or leave the transmission subdomain and update each other element on the status. The transmission network domains already supported in the upper layer can be complex architectures like rings and mesh.

In the state of the art, both layers are unaware of each other, even if they are physically connected, which means that in the case of any network change in the upper layer network, an operator may change the mapping of the low layer network creating paths between the selected optical network elements. For example, in the case of two telecommunication operators which share the lower layer and have different upper layers (one for each telecommunication operator), an operator from each telecommunication operator must configure the optical path to provide a tunnel between the IP routers of the same telecommunication operator, being a basic and a non-efficient process, which can easily produce errors and shut-downs in the network.

Another example is the maintenance or extension process of the network, where the optical nodes and IP routers may be connected and disconnected during a period of time, therefore an operator need to connect to said layers, and in addition to making maintenances tasks, the operator must configure the layers every time that a change in the networks occurs. This is also very basic and non-efficient.

Therefore, the current solution is to provide and separately operate the IP and optical network leading to inefficiencies and operational errors. In addition, this provision may also lead to interruptions in the network service and the quality of service offered to the user may be reduced.

A solution implemented in the state of the art is the Generalized Multi-Protocol Label Switching (GMPLS). GMPLS is a protocol suite extending MPLS to manage further classes of interfaces and switching technologies, such as time division multiplex, layer-2 switch, wavelength switch and fibre-switch. GMPLS implementation typically includes
- a signalling interface for the user (UNI - User Network Interface) and
- a signalling and routing method inherited from the router layer most common in optical networks (Open Shortest Path First - OSPF) for internal communication between the controllers of optical nodes.

Another protocol of the optical layer is the Resource reservation Protocol for Traffic Engineering (RSVP-TE), which is a method to create a protected an optical path in GMPLS control plane. But nowadays GMPLS only provides path protection of already created optical circuits and it is used for fault management purposes; therefore it does not solve the problem of how to map network configurations following a network change without any interruption of the service.

Patent document US7006434B1 describes a system and a method for operating the system for non-disruptively inserting a node into the operations of an ATM ring. This invention relates to insertion or deletion of nodes in an existing and operational ATM/SONET ring. This invention describes a network modification inside a single network layer but does not solve the problem of how to map network configurations following a network change without any interruption of the service.

Patent application document US2002167899A1 describes a system and method for the configuration, protection and repair of virtual ring networks. This invention proposes a method for the creation of a number of virtual rings (at least as many as endpoint pairs are defined inside the network) inside a given network layer, these rings being restricted topologies of a more complex one, but by selecting only the endpoints inside the network and do not declare the full topology. The virtual rings are dependent on the endpoints declared inside the same network layer for a given point to point link. This document not solve the problem of how to map network configurations following a network change, due to the fact that this invention operates only in specific endpoints inside of one network layer.

Patent document US7269177B2 describes a logical star architecture imposed on an underlying non-star network, for example a Virtual Path Ring (VPR), enhances a mesh protocol with an automatic method for Virtual Path ID (VPI) generation. The document describes a method for routing signals in a non-star network having a plurality of nodes connected in a non-star topology, but the method does not solve the problem of how to map network configurations following a network change.

Patent document US7570603B2 describes an automatic network Identification technique. This invention refers to topology variations inside routing switch layer, but the method does not solve the problem of how to map network configurations following a network change.

Due to the problems found in the interoperation process between different layers, there is a need for a higher interaction between layers to achieve an optimal process to map configurations from the upper layer (i.e. IP routers) in the lower layer (i.e. optical routers), avoiding the inefficiencies, operational errors and interruptions in the network service.

### STATEMENT OF THE INVENTION

The present invention provides a solution for the aforementioned problems by a method for automatically mapping a first configuration over a second configuration according to claim 1 and a system according to claim 7. The dependent claims define preferred embodiments of the invention. All the features described in this specification (including the claims, description and drawings) and/or all the steps of the described method can be combined in any combination, with the exception of combinations of such mutually exclusive features and/or steps.

In particular, in a first aspect of the invention there is provided a method for automatically mapping network configurations to enable at least two elements belonging to a first layer network to communicate with each other over a second layer network, wherein
- the first layer network comprises:
   - first layer elements organised in a first configuration
   - one or more first interfaces adapted to enable the first layer elements to communicate with each other over the first layer network, and
   - one or more second interfaces adapted to enable connection to a second layer network through one or more second layer elements,
- the second layer network comprises:
   - second layer elements organised in a second configuration; and
   - one or more third interfaces adapted to enable the second layer elements to communicate with each other over the second layer network,
the method comprising:
a) determining, by a second layer element a change in the first layer network,
b) propagating through one or more third interfaces towards the rest of second layer elements over the second layer network
   - routing information associated with the first configuration; and
   - a loopback address information identifying said second layer element,
c) adapting the second configuration by managing connections between said second layer element and one or more of the remaining second layer elements based on the propagated information.

This solution promotes an interaction between layers to achieve a certain level of automation to improve the time to provision the network and minimise operational mistakes.

A network configuration refers to the way a group of devices belonging to a network are configured, and it can comprise, for example, physical, logical, virtual, etc. connections between said devices in the network. Each network may also be organised in specific topology (i.e., ring, mesh, etc.) which reflects, for example, how the devices are physically connected between themselves. So, for example, in a ring topology devices may be connected to the east and to the west with a respective device, in a mesh topology the devices may be connected with each neighbouring devices. The networks may be connected between them as discussed above.

When the first layer network is changed (e.g., by adding or removing a first layer network element), hence changing the first network configuration, there may be a need to adapt the second network configuration so that the first layer network elements are still capable of communicating between themselves using the second network.

There is an assumption of pre-existing second or lower layer network and the invention allows creating adding or dropping points to serve the first or upper layer network where required.

The lower layer device loopback addresses may be propagated all over the lower network, but a mapping would only be performed among the lower layer devices that requires being mapped, for example those lower layer devices which are associated with the upper layer network that has changed. For example, in a ring topology, said lower layer devices are connected to an associated virtual ring relative to the first layer network, building lower layer add/drop points where an existing lower layer path or circuit already existed.

A loopback address of an upper layer device may be provided to a device of lower layer for being used as origin or destination for the messaging between layers; however, the loopback address of the upper layer devices may not be propagated all over the lower layer.

A loopback address of a lower layer device is propagated in the lower layer network. The use of said loopback may be used as an address to identify uniquely a lower layer device where to provision the lower layer circuits, jointly with the routing information. The element to which the loopback address belongs to is known, in the present description, as an instance of the first layer network.

In an embodiment of the invention the change in the network may correspond to addition to or deletion from the first layer network of a first layer element arranged to communicate with said second layer element over the one or more second interfaces.

In the first place, in an embodiment of the invention the second layer elements may be adapted to determine the addition of a first layer element by receiving signalling from said first layer element over the one or more second interfaces over which said first layer element and the second layer element are arranged to communicate. Additions may exist: New first layer elements may be inserted in existing second layer networks when:
- a new point of presence is needed, for instance, to serve new links to new mobile base stations or enterprises in a related area,
- new complete rings are built to extend physical connectivity to new areas.

Node addition may imply plugging of first layer elements and further, due to the invention, the physical provisioning and adaptation of the second layer network does not require any technician, which may include risks such as delays and misunderstandings and increased manpower.

These scenarios are frequent in growing areas where there is a need to widen the scope of a network but it is preferably to modify at minimum an existent network which is close to said area. Then, an element may be installed for providing service to said new area whose transport may be directed through the existent second layer network which changes.

In the second place, in an embodiment of the invention the second layer elements may be adapted to determine the removal of a first layer element by detecting absence of a connection over the one or more second interfaces over which said first layer element and the second layer element are arranged to communicate. Node removal and rearrangements may exist when:
- there is a cease or move of services to another location, or
- there is a re-parenting of nodes from one network topology to a new topology that runs in a different physical capacity, or belongs to a different head end for base stations or enterprise which may be recommended due to overload on the previous one. There may be any other reason, or
- there is a failure of one of the second layer elements, which may be considered as a "disconnection", or

In a method according to the first aspect of the invention the determination of a change in the network is detected over the one or more second interfaces.

In a method according to the first aspect of the invention the signalling from a first layer element over the one or more second interfaces comprises a UNI protocol message.

A method according to the invention is adapted to perform a complete mapping of an upper layer over a lower layer independently, without the need of an external intervention of an operator, which results in providing new services and capabilities improving cost-efficiency and providing high capacity backhaul to support high speed data capabilities introduced across access networks.

Besides, this method provides a consolidation of big sized area networks over a high capacity physical network resulting in the ability to deliver high speed and quality connectivity to consumers.

The method works in a network structure divided in two hierarchies, the lower one which provides with transportation between remote sites, and the upper one which may manage the information services and routes between sites using containers provided by the lower layer. This enables to speed up the provisioning of network services and reduce the resources required for said task.

A method according to the invention allows updating autonomously the mapping of changing configurations. Therefore, the physical path between devices of an upper layer, in this embodiment, is performed using an algorithm giving priority to the shortest path.

In an embodiment of a method according to the invention the routing information comprises an indication of the first layer network to which the first layer element belongs to. This allows further routing between a first layer network over the second layer network, since it is possible to acknowledge or store the first layer networks which may be serviced through the second layer network.

In an embodiment of a method according to the invention the routing information further includes an indication of a type of determined change in the first network. Either if the change is caused by an addition or a deletion of a first layer element, this embodiment provides the second layer elements to propagate this type of distinguishing information to the rest of elements. This allows adapting the configuration of the second layer network to that of the first network which remains after the change.

In an embodiment the routing information may comprise the distance from a second layer element to an instance of the first layer network. In the case of deletion of a first layer element, the second layer element previously plugged to said deleted first layer element may propagate said distance as infinite.

In an embodiment of a method according to the invention managing connections comprises updating tunnels linking the second layer devices.

In an embodiment, said tunnels are updated by using a specific routing protocol. This allows standardization so that the equipment and protocols implemented may be easily accessed by any expert in the art.

In an embodiment of a method according to the invention the propagation is performed by using a specific routing protocol. For example, OSPF may be used for traffic engineering for propagating routing information within the link-state advertisement (LSA) which is a basic communication means of the OSPF between second layer elements.

In an embodiment of a method according to the invention the routing protocol enables at least two first layer elements to be connected through a shortest path (SP) over the second layer network. For example, the RSVP-TE protocol with shortest path first may be used. In the present description, shortest path may be understood as the path between two first layer elements over the second layer network requiring the minimum number of jumps over second layer elements over all the possible paths for connecting said two first layer elements.

In an embodiment of a method according to the invention the propagated information is stored locally at each second layer devices in one or more routing tables.

Routing tables are known in the state of the art and useful for storing the information of which route to follow when there is a need to reach a particular destination. This embodiment allows therefore having at least a routing table for each second layer device, so that the information is stored locally and not shared among the communications or, for example, in the datagrams which are being sent over the networks. Therefore, this may result in a bandwidth saving since there is no need to share more than once the mapping information, unless the physical configuration changes.

The autonomous or automatic mapping is advantageous since it allows speeding up the configuration of devices in changing networks. In the case where the first layer network is an IP/MPLS network and a second layer network is an optical network, the method according to the invention boosts network modernization for evolution to an all-IP technology.

In said case, the IP/MPLS network is subject to change due to full deployment, further additions and removals. The mapping automation according to the invention allows a mapping in the optical layer, where the optical nodes or devices are connected to each other and know their own topology but they do not have dedicated links created with capacity to serve the IP/MPLS layer.

The IP/MPLS elements may have a routing table of the nodes that
- belong to its same network or same network ID and
- are physically reachable by messaging.

In a second aspect of the invention, there is defined a system comprising
- a first layer network comprising one or more first layer devices organised in a first configuration, wherein said first layer devices comprise one or more first interfaces adapted to enable the first layer devices to communicate with each other over the first layer network,
- one or more first layer devices comprising one or more second interfaces adapted to enable connection to a second layer network through one or more second layer devices, and
- a second layer network comprising one or more second layer devices organised in a second configuration wherein the one or more second layer devices comprise one or more third interfaces adapted to enable the second layer devices to communicate with each other over the second layer network,
wherein the second layer devices are adapted to carry out the steps of a method according to the first aspect of the invention.

The networks may be configured in any type of topology, ring, mesh, star, and the like.

### DESCRIPTION OF THE DRAWINGS

These and other characteristics and advantages of the invention will become clearly understood in view of the detailed description of the invention which becomes apparent from preferred embodiments of the invention, given just as an example and not being limited thereto, with reference to the drawings.
- Figure 1: This figure represents an embodiment of a system according to the invention. In this embodiment an IP router is plugged to an optical element and the method according to the invention maps the different layers of said routers.
- Figure 2: This figure represents an embodiment wherein a second IP router from the same network of a first router is connected to the optical layout.
- Figure 3: This figure represents an embodiment of the layout of an optical network layer and the IP network layer after the addition of a third IP element.
- Figure 4: This figure represents an embodiment of the layout of an optical network layer and the IP network layer after the addition of a third IP element.
- Figure 5: This figure represents an embodiment where an IP element is deleted.
- Figure 6: This figure represents an embodiment where two networks are plugged to an optical network.
- Figure 7: This figure shows a flow diagram of a method according to the state of the art.
- Figure 8: This figure shows a flow diagram of a method according to the invention.
- Figure 9: This figure represents an embodiment wherein the number of UNI interfaces is the same as the number of optical interfaces per optical node.
- Figure 10: This figure represents an embodiment wherein the number of UNI interfaces is lower than the number of optical interfaces per optical node.

### DETAILED DESCRIPTION OF THE INVENTION

Once the object of the invention has been outlined, specific non-limitative embodiments are described hereinafter. A distinction is made with the terms layout and network, wherein the layout is the physical distribution of transport elements and devices, and network is the logical/virtual distribution and organization of said elements and devices.

The embodiments are referred to an IP network, comprising IP/MPLS routers, being mapped on an optical network comprising optical nodes. The invention automatizes the process to provide or remove the physical connectivity between the networks.

Once a method according to the invention maps the upper layer network -IP layer- on the second layer network -optical layer-, pairs of parameters supplemented in optical layer routing protocol may be stored and refreshed at the optical routing tables. A pair of parameters may be used per optical node; each parameter, which in an example is named TLV, may contain:
- optical node identifier, for example the IP address of the optical node in the optical routing topology, and
- VRI (Virtual Ring Instance): indicator of the first layer network which the node belongs to.

In an example, the IP/MPLS nodes or devices comprise a network Identifier (network ID). Given an optical layer, the IP/MPLS node may be physically plugged through its ports to an optical node in the optical layer; a method according to the invention allows the single addition or modification of the network ID in one IP/MPLS router. Once the signalling between the IP/MPLS router and the optical layer is established, mapping the new network ID of the router in the VRI parameter at optical resources assigned to this IP/MPLS router is allowed by the invention. This parameter VRI may be stored in optical routing tables, paired with the IP address of the optical node it came from, as an extension of its own existing routing protocol.

The network ID modification may be remotely performed from a possible IP/MPLS management system. The optical acknowledgement of the signalled optical path rearrangements may also be remotely performed from a possible optical management system.

In an embodiment where the network ID modification is remotely performed, an operator may enter the new network ID of the related IP/MPLS node(s), the MPLS routers themselves and the optical nodes may refresh the value in all their routing tables. The IP/MPLS ID may be manually typed. The VRI may be mapped (calculated) by a method according to the invention at the router and signalled to the optical node. The described process may be performed every time a re-parenting happens.

Currently, IP layers and optical layers are usually connected through an Ethernet interface carrying traffic and signalling. There is a protocol for such a communication called UNI which may also supplement this invention for traffic provisioning purposes. This protocol may be established between
- IP devices which may be identified by IP addresses, in which case the loopback address of the IP/MPLS node may be named IP/MPLS loopback address,
- Optical nodes for which there is established an IP address of the Optical co-located node in the optical layer, which may be named the optical loopback address.

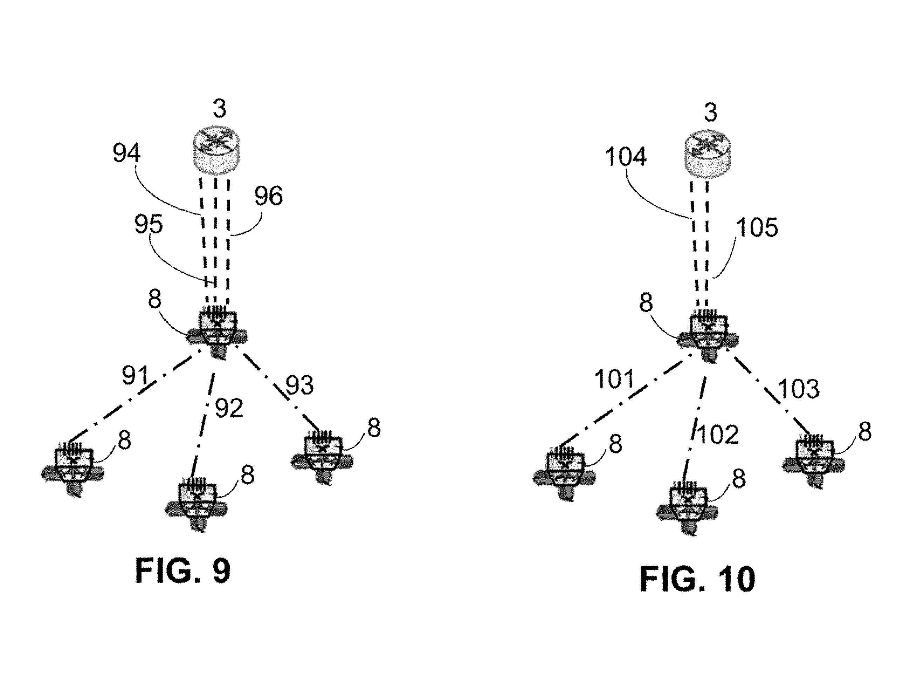

The communication between the IP layer and the optical layer may be implemented in the following manner: after the initial UNI communication is established between the two IP loopback addresses (IP/MPLS loopback address and optical loopback address), the IP/MPLS router may declare the VRI network ID and its reachability through its Ethernet ring interfaces, which in an example may be two, called East and West with their identifiers. The number of interfaces (e.g., UNI interfaces) to interconnect an IP router with an optical node is preferably less or equal to the number of optical links per optical node. So, for example, in an optical layer organised in a ring topology, where two optical interfaces (East and West) are defined, two UNI interfaces are defined between an optical node (8) and an IP router. For example in Figure 9 (which may correspond to a mesh topology in the optical layer), the number of UNI interfaces (94, 95, 96) is the same as the number of optical interfaces (91, 92, 93) per optical node (8): 3 interfaces each, whilst in Figure 10 (which may again correspond to a mesh topology in the optical layer), the number of UNI interfaces (104, 105) is lower than the number of optical interfaces (101, 102, 103) per optical node (8): two UNI interfaces and three optical interfaces. In other words, the number of UNI interfaces is not greater than the number of optical interfaces in the optical layer per each optical node (8). The optical node therefore may store in its routing table the reachability of the VRI node address through the N interfaces. The information which is sent by the IP/MPLS router to the optical layer may be a VRI identifier and East/West interface identifiers -in the case where N=2-. The UNI messaging between layers may use the loopback addresses - MPLS and optical- as origin/destination of the communication. Further, the MPLS loopback address may not be needed in the optical layer; however, what it is necessary for the optical layer is the loopback address of the optical layer since it is the entity used to identify an optical node where the optical network is plugged to the MPLS network.

Virtual ring provisioning exists in the state of the art. Said Virtual ring provisioning would happen in the IP/MPLS layer alone to create IP connectivity between a subset of routers

From this point of the process onwards, the invention allows using the same routing protocol applied at the optical layer (OSPF) so that each optical node declares its network identifier and its optical node IP address to all their neighbours flooding all optical network devices reachable so that the network elements receive the message. Every other neighbour store the network identifier associated to said optical node IP address with the associated distance in hops that takes to reach it from the interface the message is received.

The use of OSPF protocol is used to define optical connections and build physical paths instead of IP ones, abstracting the layer. What is proposed by the present invention is the IP virtual ring connections creation in OSPF. There is an export to the optical layer. The OSPF protocol itself filters the list of received alternative paths to the node and removes any except the two shortest ones from the list. These two paths are the ones to be built as physical links. The repetition of this process for each node added or removed in the same network gives the final physical paths built and optimised. The routing table is updated with the address of next node in a ring.

Figures show, as way of non-limiting examples, different embodiments following a method according to the defined method.

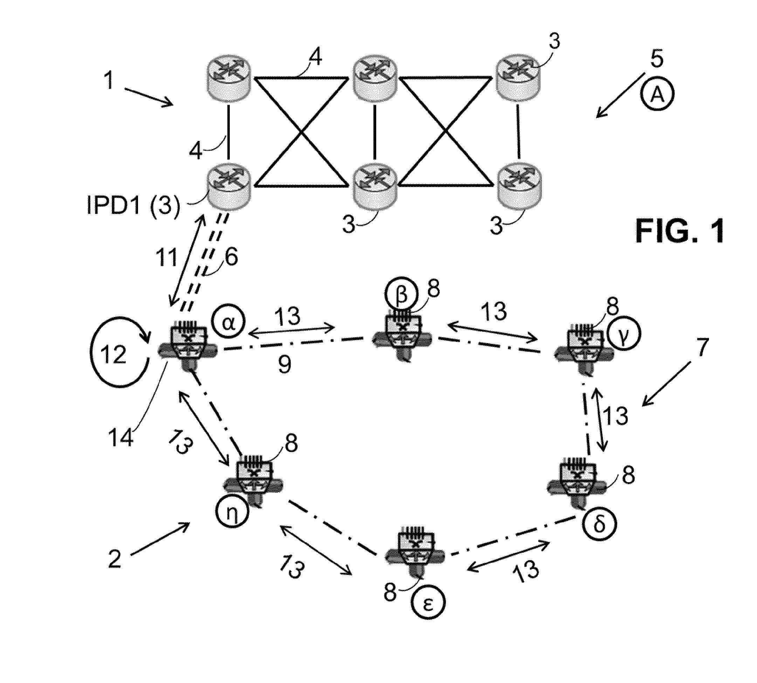

Figure 1 represents an example of a connection between a first network - IP network (5) - configured in a first configuration -IP layout (1)- and a second network - optical network (7) - configured in a second configuration (2) -optical layout, wherein a method according to the invention is implemented. The defined networks comprise devices which are laid out in a specific topology. The networks are connected between them.

The first network comprises first layers devices organised in a first configuration (1), i.e. IP/MPLS (3) router which may be plugged to the routers of the same layout through one or more first interfaces, i.e. IP interfaces (4). Each of said IP/MPLS routers may have a router address, for example:

**Table 1: List of IP/MPLS (3) Addresses**

| | | | | | | |
|---|---|---|---|---|---|---|
| Address | 10.10.10.1 | 10.10.10.2 | 10.10.10.3 | 10.10.10.4 | 10.10.10.5 | 10.10.10.6 |

The IP network (5) is connected to the second layer network (7) through one or more second interfaces (6). This connection is performed from an IP device (3) to an optical device (8) or vice versa through one or more second interfaces (6).

The second layer network (7) comprises second layer elements (8), preferably Wavelength Division Multiplexing Optical Transport Network (WDM OTN (8)). The connections between the WDM OTN (8) are performed through one or more third interfaces (9) or optical interfaces (9). Each of said WDM OTN (8) may have a router address. In Table 2 there is an example of the router addresses of the WDM OTN (8) of the Figure 1.

**Table 2: List of WDN OTN (8) Addresses**

| WDN OTN | α | β | γ | δ | ε | η |
|---|---|---|---|---|---|---|
| Address | 20.20.20.1 | 20.20.20.2 | 20.20.20.3 | 20.20.20.4 | 20.20.20.5 | 20.20.20.6 |

In an embodiment, the method may use UNI protocol to manage the connection between layers. The communication between the UNI interfaces comprises,
- using the IP address of a WDN OTN (8), known as loopback address, to establish the communication to said WDN OTN (8). In figure 1 the WDN OTN (8) which establishes a loopback address is α;
- sending by a IP/MPLS router (3) a virtual ring instance (VRI) as an IP layout (1) instance, to said WDM OTN (8), to indicate that a connection between layers may be performed.
- defining, in the case of a ring topology of the second layer network, where two possible directions may be taken from one node, α, two third interfaces (9) i.e. west and the east side of α. In another embodiment, i.e. a mesh optical layer network, more than two second interfaces may be defined to map the different sides of the network.

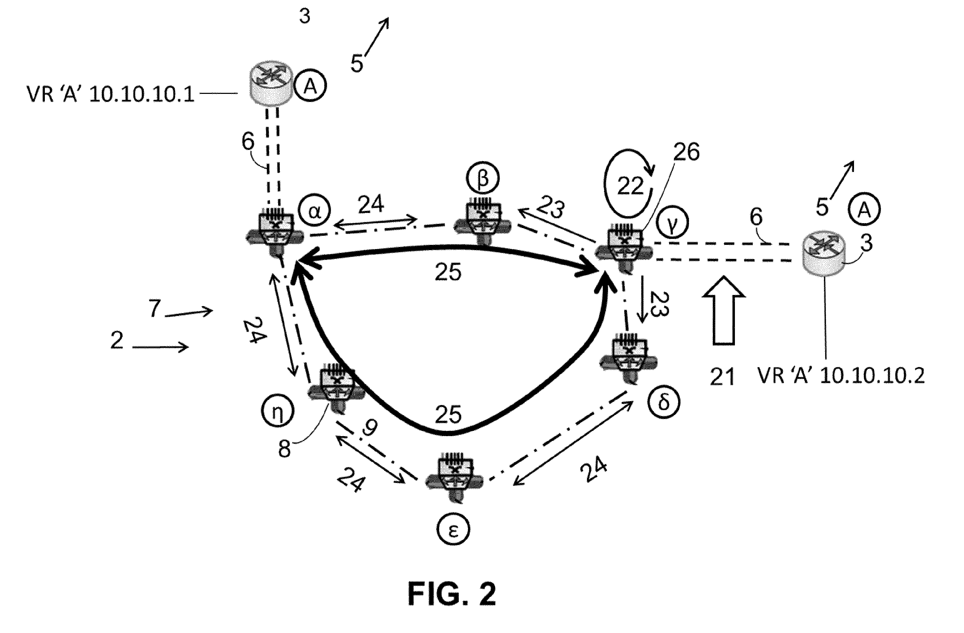

In another embodiment, in the case where the routing protocol Open Shortest Path First-Traffic engineering (OSPF-TE) is used, said protocol may be extended by defining two TLV's (Type Length Value attribute). The first TLV may be used to propagate the identifier of the IP network, and the second TLV may use to propagate the Loopback address of the WDM OTN (8) connected to the IP/MPLS (3). Said TLVs may be propagated as additional parameters in the Link State Advertisement (LSA) of the OSPF-TE protocol. In Table 3 the extended LSA message is represented, corresponding, for example, to a scenario according to figure 2:

**Table 3 LSA extended message**

| LSA | standard parameters |
|---|---|
| TLV1 | VR 'A' 10.10.10.1 |
| TLV2 | 20.20.20.1 |

In the new elements of the LSA message there are indicated:
- TLV1: the VR identifier of the IP network whose information is propagated and the IP address of the IP element which is added to the IP network.
- TLV 2: is the address of the optical node sending the LSA, i.e., the IP address of the optical node to which the Loopback address corresponds;

Figure 1 represents a scenario where a method according to the invention is implemented, following steps mentioned herein below. The process begins when the connection (11) or addition (11) of IPD1 (3) to the WDM OTN 1 (8). Said steps are:
1) The UNI protocol is started at the α (14) element and, the IP/MPLS router (3) sends a virtual ring instance (VRI) as an IP layout (1) 'A' instance to the WDM OTN (14), indicating that a connection between layers may be performed. Then the UNI protocol defines a number of third interfaces according to the optical topology. In this case, as the optical topology is a ring topology, the number of interfaces is two, being set as East and West interfaces.
The optical element α (14) learns (12) routing information which is the acknowledgement of being a local instance of the IP network 'A' (5), and updates its routing table.
In this embodiment since the OSPF protocol is used, the routing table is in an OSPF routing table. The α (14) element receives information through UNI and creates a first TLV1 with the information of the VRI connected. Additionally, the α (14) element creates a second TLV2 with WDM OTN (14) Loopback address 20.20.20.1.
Then, the α (14) element propagates (13)
- TLV1,
- TLV2.
In this embodiment, the routing information is propagated in the LSA (link state advertisement) to all OSPF neighbours, as a modification of the OSPF protocol. The LSA extended part message sent by α (14) is represented in Table 4:

**Table 4: LSA extended part message sent by α (14)**

| | |
|---|---|
| TLV1 (IP network address) | VR 'A' 10.10.10.1 |
| TLV2 (optical loopback address) | 20.20.20.1 |

2) The second layer elements (8) neighbouring said α (14) element receive the LSA from the α (14) element. Then, each second layer device (8) analyses the TLV's received and updates their routing tables: the originator IP address (20.20.20.1), the VR address and the shortest path with the distance to the originator IP address (i.e. Remote OSPF distance 1 VRI (A) originator 20.20.20.1). According to the distribution of elements in the second layout, the second layer elements (8) may store the shortest path (in a point to point layout), the two shortest paths (in a ring topology) or three or more shortest path (in a mesh topology).
Then, the rest of the second layer elements (8) propagate (13),
- said routing information and
- said loopback address,
in the LSA of the OSPF protocol.
The rest of the second layer elements (8) receive said routing information from the rest of the second layer elements (8), in such a way, that a mapping of first configuration (IP layout) (1) over a second configuration (ON layout) (2) is performed. In one embodiment, each second layer device analyse TLV's received from the rest of the second layer elements and updates in his routing table: the originator IP address (20.20.20.1) connected to the VR, the VR address and the distance from the originator IP address, (i.e. Remote OSPF distance 2 VR A). Then, each second layer device propagates (13) said information to every neighbour increasing the distance value. When propagation has been completed, each optical node stores only the two shortest paths to reach originator, (east-west in this example).
Since there are no other instances of the VRI "A" in this scenario in figure 1, there are no adaptations in the second layer network.

In Table 5 there is represented the routing table of the optical nodes, after applying the method in Figure 1; by shortest path there may be understood the distance from a WDN OTN to the nearest instance of the IP network; the symbol "x" means "any".

**Table 5: Routing table of the second device layers**

| WDN OTN | α | β | γ | δ | ε | η |
|---|---|---|---|---|---|---|
| Local IP@ | 20.20.20.1 | 20.20.20.2 | 20.20.20.3 | 20.20.20.4 | 20.20.20.5 | 20.20.20.6 |
| VRI A: | 10.10.10.x | 10.10.10.x | 10.10.10.x | 10.10.10.x | 10.10.10.x | 10.10.10.x |
| Shortest path 1 (e): | 0 | 1 | 2 | 3 | 4 | 5 |
| Shortest path 2 (w): | 0 | 5 | 4 | 3 | 2 | 1 |
| VRI A: Virtual path 1 (west-east) | - | - | - | - | - | - |
| VRI A: Virtual path2 (east-west) | - | - | - | - | - | - |

In this embodiment α (14) is the device which detects the connection or the disconnection to the first layer network. In other embodiments, the device which detects the change may be the device with lower Loopback address. In other embodiments may be a device that it is not connected to the first layer network. In other embodiments may be a predetermined device. Therefore said device may be or may not be directly plugged to the IP network. In this case, since there is only one optical element plugged to the IP network, there are no virtual paths created to connect two IP elements through the optical network, and therefore the tables are empty in this particular case.

Figure 2 represents an embodiment where an IP router (3), whose IP address is 10.10.10.2, is connected to the optical network, according to a configuration inherited from figure 1. In this case, the method proceeds as follows:
a) determining by γ (26) a change (21) in the first network (5), this change being the addition (21) of the IP element (3) whose IP address is 10.10.10.2;
b) propagating through one or more third interfaces (9) towards the rest of second layer elements (8) over the second layer network:
- the identification of the IP network the added element belongs to (A); and
- a loopback address information identifying γ (26), in this case 20.20.20.3.
In this case, γ (26) would communicate to δ and β that it is a new instance of the IP network "A" and that its IP address is 20.20.20.3 so that the rest are able to acknowledge this information and they may be able to store it in routing tables.
The LSA extended part message sent by γ (26) is represented in Table 6:

**Table 6: LSA extended part message sent by γ (26)**

| | |
|---|---|
| TLV1 | VR 'A' 10.10.10.2 |
| TLV2, Lo | 20.20.20.3 |

c) Adapting the second configuration by managing connections between said physically connected second layer element and one or more of the remaining second layer elements based on the propagated information.

The optical elements δ and β receive the LSA, from γ (26), analyse the received TLV's, update their routing tables and forward (24) said information to α and ε, and further ε forwards (24) this information to η, in such a way, that a mapping of first layer network (IP network) (1) over a second layer network (optical network layout) (2) is performed.

In this case, the adaptation comprises creating tunnels (25). In an embodiment, the optical tunnels are triggered as Resource Reservation Protocol - Traffic Engineering (RSVP-TE) using shortest path first, which comprises acknowledging by α that for connecting the IP element whose IP address is 10.10.10.1 to the IP element whose IP address is 10.10.10.2, α needs to create a tunnel (25), this tunnel being either
- the path α-β-γ, or
- the path η-ε-δ-γ.

In Table 7 there is represented the routing table of the optical devices, after applying the above mentioned steps in the Figure 2; Shortest path indicated the shortest distance from an optical element to an instance of the IP network "A"; the symbol "x" means "any":

**Table 7: Routing table of the second device layers**

| WDN OTN | α | β | γ | δ | ε | η |
|---|---|---|---|---|---|---|
| Local IP@ | 20.20.20.1 | 20.20.20.2 | 20.20.20.3 | 20.20.20.4 | 20.20.20.5 | 20.20.20.6 |
| VRI A: | 10.10.10.x | 10.10.10.x | 10.10.10.x | 10.10.10.x | 10.10.10.x | 10.10.10.x |
| Shortest path 1 (e): | 0 | 1 | 0 | 1 | 2 | 3 |
| Shortest path 2 (w): | 0 | 1 | 0 | 3 | 2 | 1 |
| VRI A: Virtual path 1 (west-east) | 20.20.20.1 | - | 20.20.0.1- | | - | - |
| | 20.20.20.2 | | 20.20.20.6- | | | |
| | 20.20.20.3 | | 20.20.20.5- | | | |
| | | | 20.20.20.4- | | | |
| | | | 20.20.20.3 | | | |
| VRI A: Virtual path2 (east-west) | 20.20.20.1 | - | 20.20.20.1- | - | - | - |
| | 20.20.20.6 | | | | | |
| | 20.20.20.5 | | 20.20.20.2- | | | |
| | 20.20.20.4 | | | | | |
| | 20.20.20.3 | | 20.20.20.3 | | | |

Therefore, according to his routing tables, α knows that it needs to connect to γ via:
- the path β-γ towards its west side, or
- the path η-ε-δ-γ towards its east side;

Similarly, γ knows that it needs to connect to α via:
- the path δ-ε-η towards its west side, or
- the path β-α towards its east side;

In a particular embodiment, a method according to the invention is implemented as follows:
a) Determining by an optical element, for example γ (26) in figure 2, a change (21) in one of its interfaces, comprising:
   - starting a UNI protocol by an OSPF device (8) for sending and receiving communications to and from an IP device (3),
   - declaring the first layer device (3) as an instance of a first IP network (A),
   - declaring two second interfaces (6) as East and West, these interfaces connecting γ (26) to the first layer device (3),
   - declaring, γ (26), a local instance for the first IP network (A) in interfaces East and West in an OSPF routing table,
   - creating a first Type Length Value (TLV) for identifying the first IP network (A) by γ (26) to propagate routing information within OSPF packets,
   - creating a second TLV with an OSPF device Loop-Back address.
b) Propagating (23, 24) through one or more third interfaces (9) towards the rest of second layer elements (8) over the second layer network (10)
   - routing information associated with the first layer network (5); and
   - a loopback address information identifying a second layer device learning the routing information,
   comprising:
   - receiving, by second layer elements (8) connected to γ (26), named OSPF neighbours, a Link State Advertisement (LSA) comprising at least two TLV,
   - analysing the TLV's received, by the neighbours,
   - inserting in a local routing table
      - the Loop-Back address,
      - first IP network (A) and
      - the distance to the OSPF device connected to the IP device.
c) Adapting the second configuration (2) by managing connections between said physically connected second layer element and one or more of the remaining second layer elements (8) based on the propagated information.
   Once routing tables are updated the optical paths are triggered as RSVP-TE tunnels to the two shortest destination loopback addresses. In an example, the creation of the optical circuit is initiated by α which is the node with lower Router ID address, in this case 20.20.20.1; the creation may be initiated or commanded by γ (26) which is the optical element detecting the change.

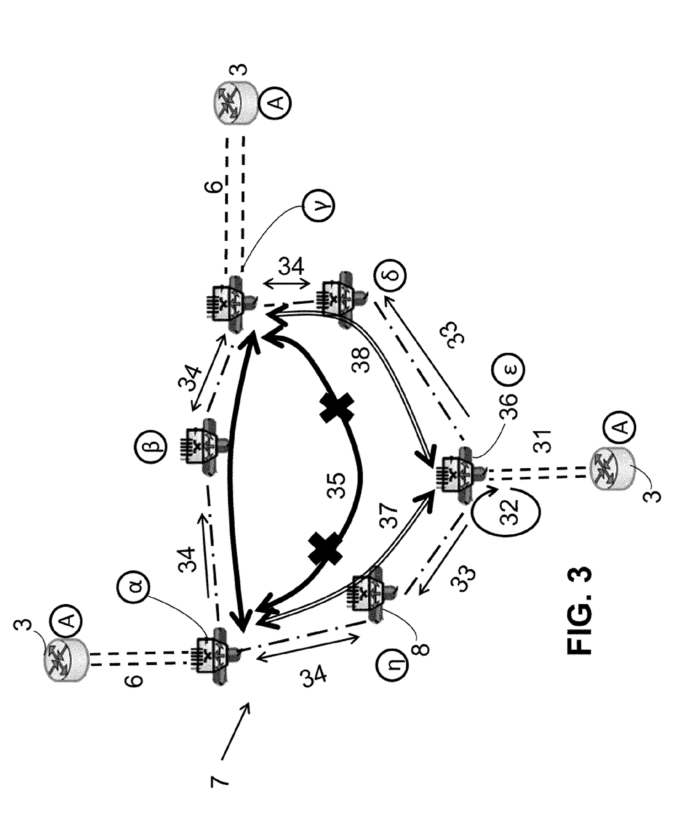

Figure 3 represents an embodiment where a new third IP router is plugged to the optical network (7) through optical element ε (36), according to the network configuration inherited from figure 2. In this case, the method proceeds as follows:

A new IP/MPLS (3) node is added with the IP address 10.10.10.3,
a) ε (36) plugged detects an addition;
b) ε (36) learns (32) and propagates (33) to δ and η in the LSA:

**Table 8: LSA extended part message sent by ε (36)**

| | |
|---|---|
| TLV1 | VR 'A' 10.10.10.3 |
| TLV2 | 20.20.20.5 (ε) |

c) The rest of second layer elements (8) receive the LSA from ε (36), analyse the TLVs received, update their routing tables and forward (34) said information in such a way that a mapping is performed.
d) Tunnels are updated (35, 37, 38) when propagation is finished.

In this embodiment, the updating comprises:
- ε (36) breaks (35) the tunnel α-η-ε-δ-γ, which connects the first layer devices 10.10.10.1 and 10.10.10.2 through a VR between α and γ,
- ε (36) creates (37) a new tunnel or connection α--η-ε, which connects the first layer devices 10.10.10.1 and 10.10.10.3 through a VR between α and ε (36).
- ε (36) creates (38) a new tunnel ε-δ-γ, which connects the first layer devices 10.10.10.2 and 10.10.10.3 through a VR between γ and ε (36).
- the tunnel α-β-γ is maintained, connecting the first layer devices 10.10.10.1 and 10.10.10.2 through a VR between α and γ,

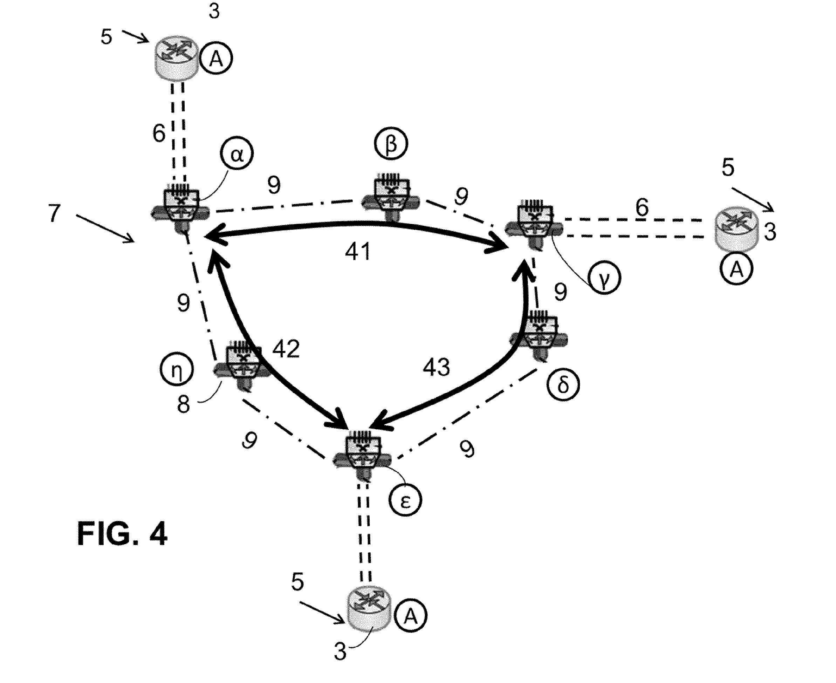

Figure 4 represents the final configuration of the tunnelling after applying the method described for figure 3. The IP network (5) is connected to the optical network (7) through the second interfaces (6). The optical nodes (8) are connected between them through the third interfaces (9). This method provides connections between the elements of the first network devices (3), through a second network (2), by tunnels (41, 42, 43).

Advantageously, the method provides an interoperation process between different layers; there is a higher interaction between layers achieving an optimal process to map networks from the upper layer (i.e. IP routers) in the lower layer (i.e. optical routers), avoiding the inefficiencies, operational errors and interruptions in the network service, found in the state of the art.

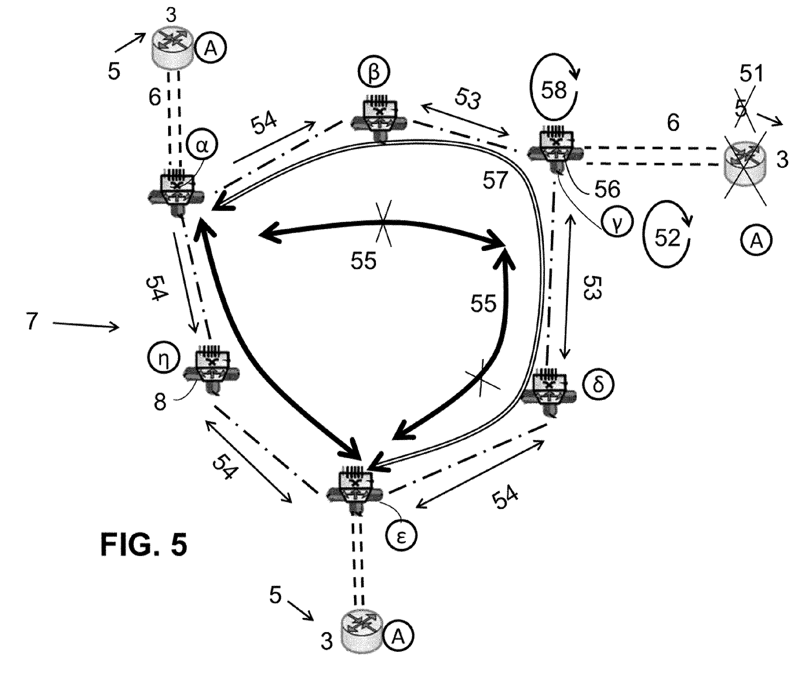

The figure 5 represents an embodiment wherein an IP router from the IP network (5) is removed to the optical network (7), according to the configuration network inherited from the figure 4. The UNI protocol, as previously described, is being used in second interfaces (6). In this case, the method proceeds as follows:
a) Determining (52), by γ (56), a change in the first network (5), said change being the deletion of an IP element.
The UNI interface is not anymore in the local IP element in γ (56), so
b) γ (56) triggers or broadcasts (53) a "route update" to the rest of the optical elements (8) to state that the distance from γ (56) to the deleted element is infinite. Said process is an example through which γ (56) communicates (53) "I am not anymore attached to the Virtual ring "A", and my loopback address is 20.20.20.5". In another example, a flag may exist in the LSA. In an example, there exists a periodic routing update in the UNI interface. The rest of α-η-ε-δ-β receive the LSA, from γ (56), analyse TLVs received, and update their routing tables forward (54).
c) Adapting the second configuration (2) by managing connections between α-η-ε-δ-γ-β based on the propagated information, which comprises:
From this point onwards, the rest of optical elements may proceed as follows: The element ε may modify its connections since it receives that the distance to the instance which was connected through γ (56) is now infinite; therefore, ε creates a connection or tunnel (57) to α in its east interface, which is the next instance to VRI "A" via its east interface.
Besides, ε may check its west connection and if it remains the same, then ε does nothing.
On the other hand, α creates a connection to ε since it is the nearest instance via its west interface.
In Table 9 there is represented an example of the routing tables of second device layers, after applying the method in the Figure 5; the symbol "x" means "any":

**Table 9: Routing table of the second device layers**

| WDN OTN | α | β | γ | δ | ε | η |
|---|---|---|---|---|---|---|
| Local IP@ | 20.20.20.1 | 20.20.20.2 | 20.20.20.3 | 20.20.20.4 | 20.20.20.5 | 20.20.20.6 |
| VR: A | 10.10.10.x | 10.10.10.x | 10.10.10.x | 10.10.10.x | 10.10.10.x | 10.10.10.x |
| Shortest path 1 (e) | 2 | 1 | 2 | 3 | 4 | 1 |
| Short est path 2 (w) | 4 | 3 | 2 | 1 | 2 | 1 |
| VRI A: Virtual path 1 (east-west) | | - | | - | 20.20.20.1- | - |
| | 20.20.20.1- | | | | 20.20.20.2- | |
| | 20.20.20.6- | | | | 20.20.20.3- | |
| | 20.20.20.5 | | | | 20.20.20.4- | |
| | | | | | 20.20.20.5 | |
| VRI A: Virtual path2 (east-west) | 20.20.20.1- | - | | - | | - |
| | 20.20.20.2- | | | | 20.20.20.1- | |
| | 20.20.20.3- | | | | 20.20.20.6- | |
| | 20.20.20.4- | | | | 20.20.20.5 | |
| | 20.20.20.5 | | | | | |

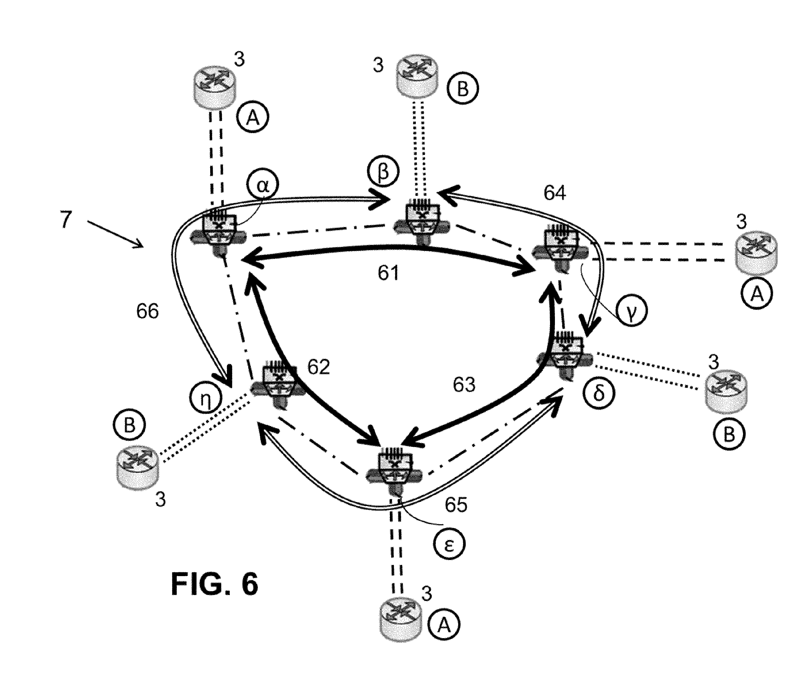

Figure 6 represents a network configuration according to an embodiment applying the method of the invention, wherein two different IP networks (A, B), are connected to the second network.

An example of a routing table of the optical nodes (8) in a scenario with two IP networks, "A" and "B" may contain:

**Table 10: Routing table of the Optical layout elements**

| WDN OTN | α | β | γ | δ | ε | η |
|---|---|---|---|---|---|---|
| Local IP@ | 20.20.20.1 | 20.20.20.2 | 20.20.20.3 | 20.20.20.4 | 20.20.20.5 | 20.20.20.6 |
| VR: A | 10.10.10.x | 10.10.10.x | 10.10.10.x | 10.10.10.x | 10.10.10.x | 10.10.10.x |
| Shortest path 1 (e) | 0 | 1 | 0 | 1 | 0 | 1 |
| Short est path 2 (w) | 0 | 1 | 0 | 1 | 0 | 1 |
| VRI A: Virtual path 1 (east) | 20.20.20.1- | - | 20.20.20.1- | - | 20.20.20.3- | - |
| | 20.20.20.6- | | 20.20.20.2- | | 20.20.20.4- | |
| | 20.20.20.5 | | 20.20.20.3 | | 20.20.20.5 | |
| VRI A: Virtual path2 (west) | 20.20.20.1- | - | 20.20.20.3- | - | 20.20.20.1- | - |
| | 20.20.20.2- | | 20.20.20.4- | | 20.20.20.6- | |
| | 20.20.20.3 | | 20.20.20.5 | | 20.20.20.5 | |
| VR: B | 10.10.20.x | 10.10.20.x | 10.10.20.x | 10.10.20.x | 10.10.20.x | 10.10.20.x |
| Shortest path 1 (e) | 1 | 0 | 1 | 0 | 1 | 0 |
| Shortest path 2 (w) | 1 | 0 | 1 | 0 | 1 | 0 |
| VRI B: Virtual path 1 (east) | - | 20.20.20.2- | | 20.20.20.2- | | 20.20.20.4- |
| | | 20.20.20.1- | | 20.20.20.3- | | 20.20.20.5- |
| | | 20.20.20.6 | | 20.20.20.4 | | 20.20.20.6 |
| VRI B: Virtual path2 (west) | - | 20.20.20.2- | - | 20.20.20.4- | | 20.20.20.2- |
| | | 20.20.20.3- | | 20.20.20.5- | | 20.20.20.1- |
| | | 20.20.20.4 | | 20.20.20.6 | | 20.20.20.6 |

The routing table may change if a further IP network is connected to the optical network or if there is a change in the type optical network.

The method provides connections between the elements of the first network devices (3), through a second network (7), creating tunnels (61, 62, 63) in the case of the first network (A), and (64, 65, 66) in the case of the first network (B).

In the embodiment of figure 6, the IP network A and the IP network B are connected to different optical nodes (8), but a different configuration is possible. The method can be performed even if the IP network A and B are connected to the same optical nodes (8) or partially (i.e. A y B are connected to α, but A is only A connected to γ, and B is only connected to ε). Therefore the method may be performed for more than one IP networks (A, B, C, etc.) which may be connected to the optical network (7).

When a new IP element is added, the optical element receives the virtual instance from the IP server, i.e., A, B, C, identifying the network to which the IP element belongs. However, the optical element is agnostic of the IP address of the IP element, but this information may be comprised for example via a unique binary label identified by a binary pattern. For example, in the case of using an architecture based on 32 bits, it could be possible to have up to 2EXP (32-1) networks with different VRI instances. In the case of 16bits there may be up to 2EXP (16-1).

In the embodiments shown in figures 1-6 the optical network (7) is laid out in a ring configuration, which means that the number of third interfaces or optical interfaces (9) is two for each optical element, and therefore the method may only obtain the two shortest paths to connect each interfaces (previously named west and east). The method may be implemented in any type of topology, for example point-to-point, star, tree, bus, start, mesh or fully connected. The difference is that depending on the topology, the method obtains one or more shortest paths for each second layer device, (point to point: 1 shortest path, ring 2 shortest paths, fully connected 2 or more shortest paths, etc.).

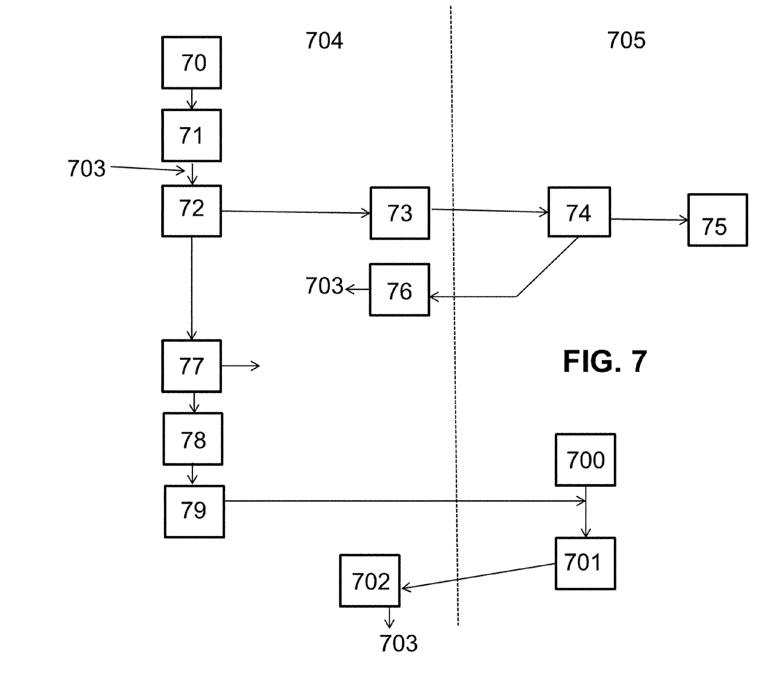

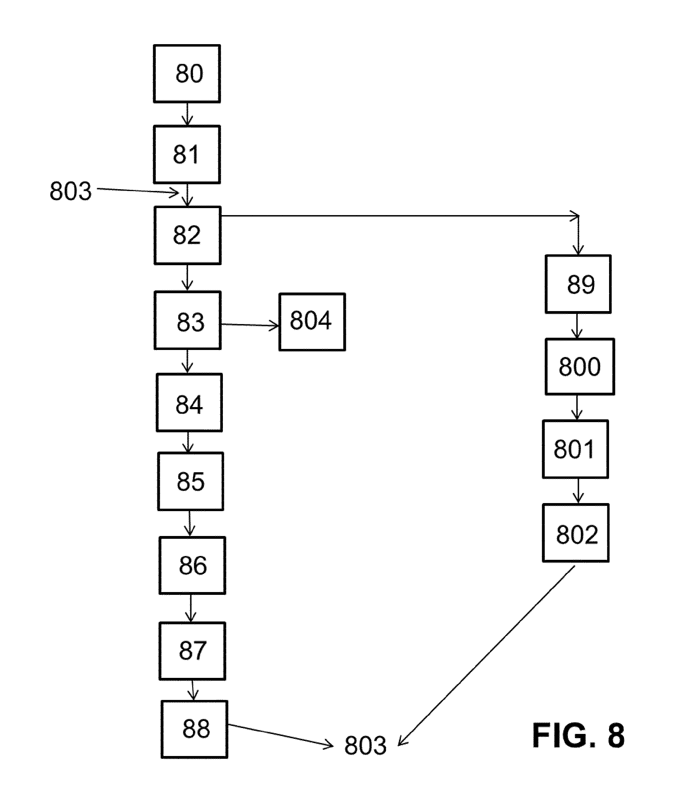

Figures 7 and 8 shows flow diagrams showing how the mapping would be performed in the state of the art and how it would be performed with a method according to the invention.

In particular, in figure 7 there is shown an embodiment of a method for mapping according to the state of the art. The reference numbers show two scenarios which need to cooperate through a coordinated maintenance window for obtaining such mapping in the state of the art: MPLS team workflow (704) and Optical team workflow (705). The diagram shows the following steps:
- 70: IP/MPLS modified network. Optical HW resources allocated
- 71: MPLS network configuration
- 72: Is there a node to remove? If response is "yes", then the method goes to step 73; if response is "no" then it goes to step 77;
- 73: Bypass command to optical including new remaining node parts;
- 74: Optical NMS operator; optical paths deleted and node bypass creation;
- 75: MPLS can be removed;
- 76: MPLS NMS operator: Node deletion; then it goes to 703;
- 77: Is there a new node to add? If the response is "NO" then the method ends ; If the response is "YES" then the method continues in step 78;
- 78: MPLS NMS operator. Full configuration of the node, pending activate interfaces to
- Optical; in this case there is a manual execution in two steps by two teams optical NMS operator;
- 79: command to optical to redefine optical paths to add/drop the target router;
- 700: In the Optical side, command to redefine optical paths to add/drop the target router;
- 701: Optical NMS operator: optical paths created to new node
- 702: MPLS NMS operator: activate interfaces to optical and check connectivity; afterwards the method continues in step 72 through a jump (703).

In figure 8 there is shown a single scenario where an embodiment of a method according to the invention allows mapping. The steps performed are:
- 80: IP/MPLS modified networks. Optical HW resources allocated;
- 81: MPLS network configuration;
- 82: Is there a node to remove? If response is "yes" then the method continues in step 89; If the response is "no" then the method continues in step 83;
- 83: Is there any new node to add? If response is "no" then the method ends (804); otherwise it continues in step 84;
- 84: MPLS NMS operator: node network ID addition to interfaces East and West to optical node. Interfaces activated.
- 85: Automatic messaging (UNI) established between a router and a co-located optical node to stablish one-to-one node association by propagating network ID through east and west local tributary connections between layers. At this point is where the invention stablishes the difference: provisioning automation via signalling as opposite to manual execution by optical NMS operator.
- 86:---Automatic node addition to optical network signalled at active optical layer protocol (OSPF). It finds closest existing optical neighbour(s) in topology for east and west regional connection; Router and Optical node local links correspondence established. Router network ID correspondence propagated to optical layer regional interfaces.
- 87: Automatic Optical link Add-drop connection with closest neighbour(s). Optical ring closest neighbours become aware that they have to establish connection with the target being optical node east and west ports.
- 88: MPLS router announces its presence to establish communication with topology neighbours. Neighbour routers store new paths as part of MPLS discovery process. The this embodiment according to the invention is finishes so that restarting can be performed (803)
- 89: If there a node to remove, then this embodiment allows to the MPLS NMS operator to delete the network ID; At this point the invention allows optical rearrange automation via signalling as opposite to manual execution by optical NMS operator.
- 800: MPLS router network ID is no more announced (UN!) through the local interfaces to optical layer;
- 801: After a defined period of time. The routes to the node to be eliminated of the network disappear from the routing tables of the optical nodes members of the network (OSPF);
- 802 The routes between remaining optical nodes in the network are optimised. Optical paths are rebuilt bypassing the removed node; the embodiment of the method may restart (803).

## Claims

1. A method for automatically mapping network configurations to enable at least two elements belonging to a first layer network (5) to communicate with each other over a second layer network (7), wherein
- the first layer network (5) comprises:
- first layer elements (3) organised in a first configuration (1)
- one or more first interfaces (4) adapted to enable the first layer elements (3) to communicate with each other over the first layer network (5), and
- one or more second interfaces (6) adapted to enable connection to a second layer network (7) through one or more second layer elements (8),
- the second layer network (7) comprises:
- second layer elements (8) organised in a second configuration (2); and
- one or more third interfaces (9) adapted to enable the second layer elements (8) to communicate with each other over the second layer network (7),
the method comprising:
a) determining (12, 22, 32, 52), by a second layer element (8) a change in the first network (5),
b) propagating (13, 23, 24, 33, 34, 53, 54) through one or more third interfaces (9) towards the rest of second layer elements (8) over the second layer network (10):
- routing information associated with the first configuration (1); and
- a loopback address information identifying said second layer element (8),
c) adapting the second configuration (2) by managing connections between said second layer element (8) and one or more of the remaining second layer elements based on the propagated information.

2. A method in accordance with claim 1, wherein the determination of a change is detected over the one or more second interfaces (6).

3. A method in accordance with claim 1 or claim 2, wherein the change corresponds to addition to or deletion from the first layer network (5) of a first layer element (3) arranged to communicate with said second layer element (8) over the one or more second interfaces (6).

4. A method in accordance with claim 3, wherein the second layer element (8) is arranged to determine the addition of said first layer element (3) by receiving signalling from said first layer element (3) over the one or more second interfaces (6) over which said first layer element (3) and the second layer element (8) are arranged to communicate.

5. A method in accordance with claim 3, wherein the second layer element (8) is arranged to determine the removal of said first layer element (3) by detecting absence of a connection over the one or more second interfaces (6) over which said first layer element (3) and the second layer element (8) are arranged to communicate.

6. A method according to any of the above claims, wherein the routing information comprises an indication of the first layer network (5) to which the first layer element (3) belongs to.

7. A method according to claim 6, wherein the routing information further includes an indication of a type of determined change in the first network (5).

8. A method according to any of the above claims wherein managing connections comprises updating tunnels (25, 35, 37, 38, 41, 42, 43, 55, 57, 61, 62, 63, 64, 65, 66) linking the second layer devices (8).

9. A method according to any of the above claims wherein the propagation is performed by using a specific routing protocol.

10. A method according to claim 9, wherein the routing protocol enables at least two first layer elements (3) to be connected through a shortest path (SP) over the second layer network.

11. A method for automatically mapping according to any of the preceding claims wherein the propagated information is stored locally at each second layer devices (8) in one or more routing tables.

12. A method according to any of claims 4 to 12, wherein the signalling comprises a UNI protocol message.

13. A system comprising
- a first layer network (5) comprising one or more first layer devices (3) organised in a first configuration (1), wherein said first layer devices (3) comprise one or more first interfaces (4) adapted to enable the first layer devices (3) to communicate with each other over the first layer network (5),
- one or more first layer devices (3) comprising one or more second interfaces (6) adapted to enable connection to a second layer network (7) through one or more second layer devices (8), and
- a second layer network (7) comprising one or more second layer devices (8) organised in a second configuration (2), wherein the one or more second layer devices (8) comprise one or more third interfaces (9) adapted to enable the second layer devices (8) to communicate with each other over the second layer network (7)
wherein the second layer devices (8) are adapted to carry out the steps of a method according to any of claims 1 to 12.
